(19) Europäisches Patentamt / European Patent Office / Office européen des brevets

(11) **EP 4 339 250 A1**

(12) **EUROPEAN PATENT APPLICATION**
published in accordance with Art. 153(4) EPC

(43) Date of publication:
**20.03.2024 Bulletin 2024/12**

(21) Application number: **22807797.0**

(22) Date of filing: **10.05.2022**

(51) International Patent Classification (IPC):
**C09D 133/04** (2006.01)   **C09D 167/00** (2006.01)
**C09D 179/04** (2006.01)   **C09D 5/00** (2006.01)

(52) Cooperative Patent Classification (CPC):
**C09D 5/00; C09D 133/04; C09D 167/00;
C09D 179/04**

(86) International application number:
**PCT/KR2022/006675**

(87) International publication number:
**WO 2022/240149 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.05.2021 KR 20210061008**

(71) Applicant: **KCC Corporation
Seoul 06608 (KR)**

(72) Inventors:
• **KIM, Changhun
Ulsan 44735 (KR)**
• **KIM, Heeseung
Goyang-si, Gyeonggi-do 10591 (KR)**

(74) Representative: **Newcombe, Christopher David et al
Venner Shipley LLP
200 Aldersgate
London EC1A 4HD (GB)**

(54) **CLEAR COAT COMPOSITION**

(57) The present invention relates to a clear coat composition comprising a first acrylic resin, a second acrylic resin, a polyester resin, a silicone-modified polyester resin and a melamine resin, wherein the first acrylic resin has a glass transition temperature of 25 to 55 °C, and the second acrylic resin has a glass transition temperature of 1 to 20 °C.

**EP 4 339 250 A1**

**Description**

[Technical Field]

The present invention relates to a clear coat composition having excellent appearance characteristics, fouling resistance, adhesiveness characteristics during re-painting, and solvent resistance of the manufactured coating film.

[Background Art]

The car body is subjected to multiple coating processes such as electro-deposition coating, intermediate coating, base coating, and clear coating to improve the appearance characteristic and protect the surface from the external environment. Specifically, it is common to apply and cure the electro-deposition paint and the intermediate paint on the car body, and then continuously apply a base coat and a clear coat on the intermediate coat, followed by drying and curing. Also, in the case of base coat and clear coat, it is common to apply and dry the base coat composition, then apply the clear coat composition, and cure the clear coat and base coat together at 140 to 150 °C.

In addition, the conventional clear coat composition is based on a urethane curing system, comprising a polyester resin, an acrylic resin, a melamine curing agent, or a block isocyanate-based curing agent. In addition, the conventional clear coat composition as described above is widely used because the manufactured coating film has excellent appearance characteristics and excellent scratch resistance. Specifically, Korean Patent No. 1655621 (Patent Document 1) discloses a clear coating composition containing two types of acrylic polyol resin, polyester polyol resin, a reactive silicone additive, and a two-component type isocyanate curing agent.

However, the conventional clear coating composition as in Patent Document 1 lacks the fouling resistance of the manufactured coating film, and thus causes oil and/or dirt to adhere to the surface due to external and/or process contamination, thereby having limitations such as poor appearance characteristics and lack of smoothness in the thin film portion.

Therefore, there is a need for research and development on a clear coat composition that can produce a coat which has excellent smoothness and scratch resistance in the thin film portion of the coat, has excellent fouling resistance to external contamination due to low surface tension, and has excellent slip properties and thus excellent resistance to contaminants in the process such as sanding powder.

[Disclosure]

[Technical Problem]

The present invention is intended to provide a clear coat composition that can produce a coat which has excellent smoothness and scratch resistance in the thin film portion of the coat, has excellent fouling resistance to external contamination due to low surface tension, and has excellent slip properties and thus excellent resistance to contaminants in the process such as sanding powder.

[Technical Solution]

The present invention provides a clear coat composition comprising a first acrylic resin, a second acrylic resin, a polyester resin, a silicone-modified polyester resin, and a melamine resin,

wherein the first acrylic resin has a glass transition temperature of 25 to 55 °C and

the second acrylic resin has a glass transition temperature of 1 to 20 °C.

[Advantageous Effects]

The clear coat composition according to the present invention comprises a silicone-modified polyester resin and two types of acrylic resin with different glass transition temperatures, and thus has the effect of improving the smoothness and scratch resistance of the thin film portion of the manufactured coating film. In addition, the coating film manufactured from the clear coat composition has excellent oil resistance to external contamination due to low surface tension, and has excellent slip properties and thus is excellent in resistance to contamination that may occur during the process, such as sanding powder.

[Best Mode]

Hereinafter, the present invention will be described in detail.

The "weight average molecular weight" used in this specification is measured by a common method known in the art, and can be measured, for example, by a GPC (gel permeation chromatograph) method and the like.

In addition, the "glass transition temperature" is measured by a common method known in the art, and can be measured, for example, by a differential scanning calorimetry (DSC) .

Functional group values such as "acid value" and "hydroxyl value" can be measured by methods well known in the art, and can be measured, for example, by a titration method and the like.

Also, as used in this specification, the term "(meth)acrylic" means "acrylic" and/or "methacrylic", and the term "(meth)acrylate" means "acrylate" and/or "methacrylate".

The clear coat composition according to the present invention comprises a first acrylic resin, a second acrylic resin, a polyester resin, a silicone-modified polyester resin, and a melamine resin. At this time, the first acrylic resin and the second acrylic resin have different glass transition temperatures. As such, the clear coat composition of the present invention, which includes two types of acrylic resin with different glass transition temperatures, has the effect of improving the appearance by controlling the drying speed of the coating film. In addition, the clear coat composition of the present invention has the effect of improving the appearance characteristics and the scratch resistance by using the polyester resin and the silicone-modified polyester resin together and thus controlling the surface tension. Furthermore, the clear coat composition of the present invention comprises the polysiloxane-based surface conditioner and thus has the effect of improving the oil resistance to external contamination due to the low surface tension of the manufactured coating film and improving the resistance to dirt during the process, such as sanding powder, due to the improvement of the slip property.

First acrylic resin

The first acrylic resin plays a role in improving the physical properties such as durability and appearance characteristics of the coating film.

The first acrylic resin can be directly synthesized according to a known method, or may be a commercially available product. Specifically, the first acrylic resin may be produced by polymerizing a first vinyl-based monomer, and a first (meth)acrylate-based monomer.

The type of the first vinyl-based monomer is not particularly limited, but for example, at least one selected from the group consisting of styrene, methylstyrene, dimethylstyrene, fluorostyrene, ethoxystyrene, methoxystyrene, phenylene vinyl ketone, vinyl t-butyl benzoate, vinyl cyclohexanoate, vinyl acetate, vinyl pyrrolidone, vinyl chloride, vinyl alcohol, acetoxystyrene, t-butylstyrene and vinyltoluene can be used.

The first (meth)acrylate-based monomer may comprise at least one selected from the group consisting of a (meth)acrylate monomer not containing a hydroxy group and a (meth)acrylate monomer containing a hydroxy group.

For example, the hydroxy group-free (meth)acrylate monomer may comprise at least one selected from the group consisting of (meth)acrylic acid, methyl (meth)acrylic acid, (meth)acrylate, methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, hexyl (meth)acrylate, heptyl (meth)acrylate, isooctyl (meth)acrylate, octyl (meth)acrylate, 2-ethylhexyl(meth)acrylate, isodecyl(meth)acrylate, decyl(meth)acrylate, dodecyl(meth)acrylate, isobornyl (meth)acrylate, and lauryl (meth)acrylate.

The hydroxyl group-containing (meth)acrylate monomer may be, for example, a hydroxyalkyl-containing (meth)acrylate, and specifically may comprise at least one selected from the group consisting of 2-hydroxy methyl(meth)acrylate, 2-hydroxy ethyl(meth)acrylate, 2-hydroxy propyl (meth)acrylate, and 2-hydroxy butyl (meth)acrylate.

For example, the first acrylic resin may be manufactured using radical polymerization, and the physical properties of the first acrylic resin, that is, the weight-average molecular weight (Mw), the hydroxyl value (OHv), the acid value (Av), etc., can be adjusted depending on the initiator and polymerization time.

The first acrylic resin and the second acrylic resin have different glass transition temperatures. As described above, by comprising two types of acrylic resin with different glass transition temperatures, the clear coat composition has the effect of maintaining an appropriate drying speed and thus improving the appearance characteristics of the manufactured coating film.

For example, the first acrylic resin may have a higher glass transition temperature than the second acrylic resin. Specifically, the first acrylic resin may have a glass transition temperature that is 20 to 40 °C or 24 to 35°C higher than the second acrylic resin. If the difference between the glass transition temperatures of the first acrylic resin and the second acrylic resin is less than the above range, that is, if the glass transition temperature of the first acrylic resin is the same as or similar to the glass transition temperature of the second acrylic resin, there is a problem that the drying speed of the paint is decreased and the mechanical properties of the manufactured coating film are deteriorated. In addition, if the difference between the glass transition temperatures of the first acrylic resin and the second acrylic resin exceeds the above range, that is, if the glass transition temperature of the first acrylic resin is excessively larger than the glass transition temperature of the second acrylic resin, there is a problem that the drying speed and the reaction speed are increased, thereby causing the coating film to become brittle and thus reducing the appearance and the scratch resistance.

The first acrylic resin may have a glass transition temperature (Tg) of 25 to 55 °C, or 35 to 45 °C. If the glass transition temperature of the first acrylic resin is within the above range, there is an effect of improving the gloss characteristics of the coating film. In addition, if the glass transition temperature of the first acrylic resin is less than the above range, there is a problem that the drying speed becomes faster and thus the manufactured coating film becomes brittle, thereby resulting in insufficient scratch resistance. If the glass transition temperature of the first acrylic resin exceeds the above range, the drying speed is too slow and thus the appearance characteristics and the hardness of the coating film may become insufficient.

In addition, the first acrylic resin may have a hydroxyl value (OHv) of 50 to 100 mgKOH/g, or 75 to 95 mgKOH/g. If the hydroxyl value of the first acrylic resin is within the above range, the curability of the composition containing it can be improved. In addition, if the hydroxyl value of the first acrylic resin is less than the above range, there may be a problem that the formation of a coat by cross-linking reaction with the melamine resin, which is a curing agent, is insufficient, and thus the mechanical properties such as the hardness of the coating film are deteriorated. If the hydroxyl value of the first acrylic resin exceeds the above range, there may be a problem that due to overcuring, the coat becomes brittle, thereby reducing the elasticity, and the water resistance and weather resistance of the composition become insufficient, and the viscosity is increased, thereby reducing the workability.

The first acrylic resin may have a weight-average molecular weight (Mw) of 6,000 to 10,000 g/mol, 7,000 to 9,000 g/mol, or 7,500 to 8,500 g/mol. If the weight-average molecular weight of the first acrylic resin is within the above range, the long-term physical properties such as the durability and weather resistance of the manufactured coating film may be excellent. In addition, if the weight-average molecular weight of the first acrylic resin is less than the above range, there may be a problem that the molecular weight is small, thereby making the acid resistance, water resistance, and cold chipping resistance of the manufactured coating film insufficient. If the weight-average molecular weight of the first acrylic resin exceeds the above range, there may be a problem that as the molecular weight is increased, the flowability of the paint is decreased, thereby resulting in a decrease in the appearance and mechanical properties of the coating film.

In addition, the first acrylic resin may have an acid value (Av) of 7 mgKOH/g or less, 5 mgKOH/g or less, or 0.1 to 5 mgKOH/g. If the acid value of the first acrylic resin is within the above range, the appearance characteristics of the coating film manufactured therefrom can be improved by controlling the reactivity of the composition containing it. If the acid value of the first acrylic resin is less than the above range, there may be a problem that the curing reaction speed is lowered and the appearance of the manufactured coating film is deteriorated. If the acid value of the first acrylic resin exceeds the above range, there may be a problem that as the cohesiveness of the resin is increased, the viscosity of the composition is increased, and thus the workability and the storage characteristics at room temperature are decreased.

The first acrylic resin may have a solid content (NV) of 60 to 80 wt%, 65 to 75 wt%, or 68 to 73 wt% based on the total weight of the resin. If the solid content of the first acrylic resin is within the above range, the storage stability of the resin and the storage stability of the coat composition can be improved and the workability can be excellent. In addition, if the solid content of the first acrylic resin is less than the above range, there may be a problem that the viscosity becomes too low, thereby making the workability of the clear coat composition containing it insufficient. If the solid content of the first acrylic resin exceeds the above range, the viscosity of the first acrylic resin is too high, thereby reducing the stability during the reaction, the dispersion stability may be deteriorated and thus agglomeration may occur over time.

In addition, the acrylic resin may be comprised in an amount of 10 to 20 wt%, or 12 to 18 wt% based on the total weight of the clear coat composition. If the content of the first acrylic resin is less than the above range, there may be a problem that the drying property is reduced and the gloss, water resistance, and impact resistance of the coating film manufactured from the clear coat composition containing it are reduced. If the content of the first acrylic resin exceeds the above range, there may be a problem that the drying is quickly progressed, and thus the coating workability and painting flowability of the composition are insufficient, thereby resulting in a decrease in the appearance and scratch resistance of the coating film.

Second acrylic resin

The second acrylic resin plays a role in improving the smoothness and improving the scratch resistance of the manufactured coating film.

The second acrylic resin can be directly synthesized according to a known method, or may be a commercially available product. For example, the second acrylic resin may be produced by polymerizing at least one of a second vinyl-based monomer and a second (meth)acrylate-based monomer.

The type of the second vinyl-based monomer is not particularly limited, but for example, at least one selected from the group consisting of styrene, methylstyrene, dimethylstyrene, fluorostyrene, ethoxystyrene, methoxystyrene, phenylene vinyl ketone, vinyl t-butyl benzoate, vinyl cyclohexanoate, vinyl acetate, vinyl pyrrolidone, vinyl chloride, vinyl alcohol, acetoxystyrene, t-butylstyrene, and vinyltoluene can be used.

The second (meth)acrylate-based monomer may comprise at least one selected from the group consisting of a (meth)acrylate monomer not containing a hydroxy group and a (meth)acrylate monomer containing a hydroxy group.

For example, the hydroxy group-free (meth)acrylate monomer may comprise at least one selected from the group consisting of (meth)acrylic acid, methyl (meth)acrylic acid, (meth)acrylate, methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, hexyl (meth)acrylate, heptyl (meth)acrylate, isooctyl (meth)acrylate, octyl (meth)acrylate, 2-ethylhexyl(meth)acrylate, isodecyl(meth)acrylate, decyl(meth)acrylate, dodecyl(meth)acrylate, isobornyl (meth)acrylate, and lauryl (meth)acrylate.

The hydroxyl group-containing (meth)acrylate monomer may be, for example, a hydroxyalkyl-containing (meth)acrylate, and specifically may comprise at least one selected from the group consisting of 2-hydroxy methyl(meth)acrylate, 2-hydroxy ethyl(meth)acrylate, 2-hydroxy propyl (meth)acrylate, and 2-hydroxy butyl (meth)acrylate.

For example, the second acrylic resin may be manufactured using radical polymerization, and the physical properties of the second acrylic resin, that is, the weight-average molecular weight (Mw), the hydroxyl value (OHv), the acid value (Av), etc., can be adjusted depending on the initiator and polymerization time.

The second acrylic resin may have a glass transition temperature (Tg) of 1 to 20 °C, or 5 to 15 °C. If the glass transition temperature of the second acrylic resin is within the above range, there is an effect of improving the smoothness and scratch resistance of the coating film. In addition, if the glass transition temperature of the second acrylic resin is below the above range, there is a problem that the chipping resistance of the manufactured coating film becomes insufficient. If the glass transition temperature of the second acrylic resin exceeds the above range, the appearance characteristics and hardness of the coating film may become insufficient.

In addition, the second acrylic resin may have an acid value (Av) of 3 to 10 mgKOH/g or 5 to 8 mgKOH/g. If the acid value of the second acrylic resin is within the above range, the appearance characteristics of the coating film manufactured therefrom can be improved by controlling the reactivity of the composition containing it. If the acid value of the second acrylic resin is less than the above range, there may be a problem that the curing reaction speed is lowered and the appearance of the manufactured coating film is deteriorated. If the acid value of the second acrylic resin exceeds the above range, there may be a problem that as the cohesiveness of the resin is increased, the viscosity of the composition is increased, and thus the workability and the storage characteristics at room temperature are decreased.

The second acrylic resin may have a hydroxyl value (OHv) of 110 to 200 mgKOH/g, or 140 to 160 mgKOH/g. If the hydroxyl value of the second acrylic resin is within the above range, it has the effect of improving the weather resistance of the coating film. In addition, if the hydroxyl value of the second acrylic resin is less than the above range, there may be a problem that the formation of a coating film by cross-linking reaction with the melamine resin, which is a curing agent, is insufficient, and thus the mechanical properties such as the hardness of the coating film are deteriorated. If the hydroxyl value of the second acrylic resin exceeds the above range, there may be a problem that due to overcuring, the coating film becomes brittle, thereby reducing the elasticity, and the appearance characteristics, water resistance and scratch resistance of the manufactured coating film are insufficient.

The second acrylic resin may have a weight-average molecular weight (Mw) of 1,000 to 4,000 g/mol, 1,500 to 3,500 g/mol, or 2,000 to 3,000 g/mol. If the weight-average molecular weight of the second acrylic resin is within the above range, the long-term physical properties such as the durability and weather resistance of the manufactured coating film may be excellent. In addition, if the weight-average molecular weight of the second acrylic resin is less than the above range, there may be a problem that the molecular weight is small, thereby making the weather resistance and scratch resistance of the manufactured coating film insufficient. If the weight-average molecular weight of the second acrylic resin exceeds the above range, there may be a problem that as the molecular weight is increased, the flowability is decreased, thereby resulting in poor workability of the coat composition containing it, and it is difficult to manufacture a coating film with excellent appearance, due to poor leveling properties.

The second acrylic resin may have a solid content (NV) of 50 to 80 wt%, or 60 to 70 wt% based on the total weight of the resin. If the solid content of the second acrylic resin is within the above range, the storage stability of the resin and the storage stability of the coat composition can be improved and the workability can be excellent. In addition, if the solid content of the second acrylic resin is less than the above range, there may be a problem that the viscosity becomes too low, thereby making the workability of the coat composition containing it insufficient. If the solid content of the second acrylic resin exceeds the above range, the viscosity of the second acrylic resin is too high, thereby reducing the stability during the reaction, the dispersion stability may be deteriorated and thus agglomeration may occur over time.

In addition, the second acrylic resin may be comprised in an amount of 10 to 20 wt%, or 12 to 18 wt% based on the total weight of the clear coat composition. If the content of the second acrylic resin is less than the above range, there may be a problem that the drying property is reduced and the gloss, water resistance, oil resistance, dirt resistance and impact resistance of the coating film manufactured from the clear coat composition containing it are reduced. If the content of the second acrylic resin exceeds the above range, there may be a problem that the drying is quickly progressed, and thus the coating workability and painting flowability of the clear coat composition are insufficient, thereby resulting in a decrease in the coat appearance and scratch resistance.

Polyester resin

The polyester resin plays a role in improving the appearance characteristics of the coating film and improving the scratch resistance.

The polyester resin can be directly synthesized according to a known method, or may be a commercially available product. For example, the polyester resin may be manufactured from carboxylic acid and polyol. As another example, the polyester resin may be unmodified with silicone, and specifically, may be unmodified with organic polysiloxane.

In this case, the carboxylic acid may be, for example, at least one selected from the group consisting of caprolactone, adipic acid (AA), isophthalic acid (IPA), trimellitic anhydride (TMA), cycloaliphatic acid, phthalic anhydride, isophthalic acid, terephthalic acid, succinic acid, adipic acid, fumaric acid, maleic anhydride, tetrahydrophthalic anhydride (HHPA), hexahydrophthalic anhydride and derivatives thereof.

The polyol may be, for example, at least one selected from the group consisting of cyclohexane dimethanol (CHDM), methoxy polyethylene glycol, 1,6-hexanediol (1,6-HD), neopentyl glycol (NPG), ethylene glycol, propylene glycol, diethylene glycol, butanediol, 1,4-hexanediol, and 3-methylpentanediol.

The polyester resin may have an acid value (Av) of 15 to 25 mgKOH/g, or 18 to 22 mgKOH/g. If the acid value of the polyester resin is within the above range, rapid hardening caused by heat treatment is prevented, which has the effect of preventing poor appearance of the coating film and reducing the occurrence of bubbles (popping). If the acid value of the polyester resin is less than the above range, there may be a problem that the hardness and appearance characteristics of the manufactured coating film are reduced due to a decrease in the speed of the curing reaction. If the acid value of the polyester resin exceeds the above range, there may be a problem that as the speed of the curing reaction is increased, the coating film becomes brittle and the scratch resistance is decreased, and as the hydrophilicity is improved, the water resistance is decreased.

In addition, the polyester resin may have a hydroxyl value (OHv) of 200 to 300 mgKOH/g, or 220 to 280 mgKOH/g. If the hydroxyl value of the polyester resin is within the above range, it has the effect of improving the spreadability of the coating film and improving chemical resistance due to urethane reaction. In addition, if the hydroxyl value of the polyester resin is less than the above range, there may be a problem that the durability, adhesiveness characteristics during re-painting and solvent resistance of the manufactured coating film are reduced due to the insufficient crosslinking density caused by the insufficient reactivity with melamine resin. If the hydroxyl value of the polyester resin exceeds the above range, there may be a problem that overcuring occurs and the coating film becomes brittle, thereby deteriorating its appearance and scratch resistance.

The polyester resin may have a glass transition temperature (Tg) of 15 to 30 °C, or 18 to 25 °C. If the glass transition temperature of the polyester resin is within the above range, workability (spray feel) is excellent and it has the effect of giving flexibility to the coating film. If the glass transition temperature of the polyester resin is less than the above range, there may be a problem that the drying speed of the paint is decreased and the mechanical properties of the coating film are deteriorated. If the glass transition temperature of the polyester resin exceeds the above range, there may be a problem that as the drying speed is increased, the appearance is deteriorated, and as the coating film becomes brittle, the scratch resistance is decreased.

In addition, the polyester resin may have a weight average molecular weight (Mw) of 800 to 1,500 g/mol, or 1,000 to 1,300 g/mol. If the weight average molecular weight of the polyester resin is within the above range, the smoothness of the paint is improved and it has the effect of forming a soft coating film. If the weight average molecular weight of the polyester resin is less than the above range, there may be a problem that the mechanical properties of the manufactured coating film are deteriorated due to the low molecular weight. If the weight average molecular weight of the polyester resin exceeds the above range, there may be a problem that as the molecular weight is increased, the flowability of the paint is decreased and the coating film becomes hard, thereby reducing the smoothness and scratch resistance.

The polyester resin may have a solid content (NV) of 60 to 85% by weight, or 70 to 80% by weight, based on the total weight of the resin. If the solid content of the polyester resin is within the above range, it has the effect of reducing the content of total volatile organic compounds (TVOC) due to the high solid content. If the solid content of the polyester resin is less than the above range, there is a problem of decreased curing reactivity due to a decrease in the solid content of the composition. If the solid content of the polyester resin exceeds the above range, there may be a problem that the workability of the manufactured paint is poor and the appearance is deteriorated.

In addition, the polyester resin may have a viscosity at 25 °C of 700 to 1,900 cps, 750 to 1,850 cps, or 800 to 1,800 cps. If the viscosity at 25 °C of the polyester resin is within the above range, it has the effect of increasing the workability of the coat composition. In addition, if the viscosity at 25 °C of the polyester resin is less than the above range, there is a problem that the viscosity of the composition is too low and thus the coating film is not formed, thereby resulting in a decrease in the adhesiveness and chipping resistance of the coating film. If the viscosity at 25 °C of the polyester resin exceeds the above range, there may be a problem that the appearance characteristics of the manufactured coating film are insufficient due to insufficient workability of the composition.

The polyester resin may be included in an amount of 1 to 10% by weight, or 3 to 8% by weight, based on the total weight of the clear coat composition. If the polyester resin is included within the above content range, it has the effect of improving appearance of the coat, scratch resistance, and coat smoothness. If the content of the polyester resin in the composition is less than the above range, there may be a problem that the crosslinking density is decreased and the mechanical properties and appearance are deteriorated. If the content of the polyester resin in the composition exceeds the above range, there may be a problem that the viscosity of the composition may increase excessively, thereby resulting in poor pinhole characteristics that reduce workability and drying properties.

Silicone-modified polyester resin

The silicone-modified polyester resin plays a role in improving the appearance characteristics of the coating film and improving the smoothness by preventing pinholes.

The silicone-modified polyester resin can be directly synthesized according to a known method, or may be a commercially available product. Specifically, the silicone-modified polyester resin can be manufactured by modifying the polyester resin prepared from carboxylic acid and polyol with organic polysiloxane.

In this case, the carboxylic acid may be, for example, at least one selected from the group consisting of caprolactone, adipic acid (AA), isophthalic acid (IPA), trimellitic anhydride (TMA), cycloaliphatic acid, phthalic anhydride, isophthalic acid, terephthalic acid, succinic acid, adipic acid, fumaric acid, maleic anhydride, tetrahydrophthalic anhydride (HHPA), hexahydrophthalic anhydride and derivatives thereof.

The polyol may be, for example, at least one selected from the group consisting of cyclohexane dimethanol (CHDM), methoxy polyethylene glycol, 1,6-hexanediol (1,6-HD), neopentyl glycol (NPG), ethylene glycol, propylene glycol, diethylene glycol, butanediol, 1,4-hexanediol, and 3-methylpentanediol.

The organic polysiloxane may include functional groups and non-functional organic groups. For example, the organic polysiloxane may include at least one functional group selected from the group consisting of silanol and alkoxy groups, and may include at least one non-functional organic group selected from the group consisting of methyl, propyl, and phenyl groups. The alkoxy group may be, for example, methoxy, ethoxy, and butoxy groups.

The silicone-modified polyester resin may have an acid value (Av) of 10 mgKOH/g or less, 8 mgKOH/g or less, or 1 to 8 mgKOH/g. If the acid value of the silicone-modified polyester resin is less than the above range, there may be a problem that the appearance characteristics of the coating film are reduced due to the high surface tension of the composition. If the acid value of the silicone-modified polyester resin exceeds the above range, there may be a problem that the mechanical properties of the coating film is deteriorated due to too low surface tension.

In addition, the silicone-modified polyester resin may have a hydroxyl value (OHv) of 150 to 250 mgKOH/g, or 190 to 210 mgKOH/g. If the hydroxyl value of the silicone-modified polyester resin is less than the above range, there may be a problem that the durability and chemical resistance of the manufactured coating film are reduced due to the insufficient crosslinking density caused by the insufficient reactivity with melamine resin. If the hydroxyl value of the silicone-modified polyester resin exceeds the above range, there may be a problem that the paint is overcured and thus the coating film becomes brittle, thereby deteriorating its appearance and scratch resistance.

The silicone-modified polyester resin may have a glass transition temperature (Tg) of -20 to 0 °C, or -15 to -5 °C. If the glass transition temperature of the silicone-modified polyester resin is less than the above range, there may be a problem that the hardness of the coating film is decreased due to increased elasticity, and the appearance characteristic of the coating film is decreased due to poor drying properties of the paint. If the glass transition temperature of the silicone-modified polyester resin exceeds the above range, there may be a problem that the appearance characteristic of the coating film is deteriorated due to the decrease in the flowability of the paint and the elasticity of the coating film is decreased, thereby resulting in reduced adhesiveness and chipping resistance.

In addition, the silicone-modified polyester resin may have a weight-average molecular weight (Mw) of 1,300 to 2,500 g/mol, 1,500 to 2,200 g/mol, or 1,700 to 2,000 g/mol. If the weight-average molecular weight of silicone-modified polyester resin is within the above range, the smoothness of the paint is improved and it has the effect of forming a soft coating film. If the weight-average molecular weight of the silicone-modified polyester resin is less than the above range, there is a problem that the mechanical properties of the manufactured coating film are deteriorated due to the small molecular weight. If the weight-average molecular weight of the silicone-modified polyester resin exceeds the above range, there may be a problem that as the molecular weight is increased, the flowability of the paint decreases, thereby making the coating film hard and thus reducing the smoothness and scratch resistance.

The silicone-modified polyester resin may have a viscosity of 5,000 to 10,000 cps, or 6,000 to 9,000 cps at 25 °C. If the viscosity of the silicone-modified polyester resin at 25°C is less than the above range, there may be a problem that the viscosity of the paint is too low and thus the coating film is not formed, thereby resulting in a decrease in the adhesiveness and scratch resistance of the coating film. If the viscosity of silicone-modified polyester resin at 25 °C exceeds the above range, there may be a problem that the appearance characteristic of the manufactured coating film is deteriorated due to insufficient workability of the paint.

In addition, the silicone-modified polyester resin may have a solid content (NV) of 80% by weight or more, or 85 to 95% by weight, based on the total weight of the resin. If the solid content of the silicone-modified polyester resin is less than the above range, there may be a problem that the curing reactivity is decreased due to a decrease in solid content in the paint. If the solid content of the silicone-modified polyester resin exceeds the above range, there may be a problem that the workability of the paint is inferior and the appearance characteristic is deteriorated.

The silicone-modified polyester resin may be included in an amount of 1 to 10% by weight, or 3 to 8% by weight, based on the total weight of the clear coat composition. If the silicone-modified polyester resin is included within the above content range, there is an effect of improving the appearance, scratch resistance, and coat smoothness of the coating film. If the content of silicone-modified polyester resin in the composition is less than the above range, there may be a problem that the crosslinking density is decreased, thereby resulting in a decrease in the appearance and scratch resistance of the coating film. If the content of polyester resin in the composition exceeds the above range, there may be a problem that the viscosity of the composition becomes excessively high, which reduces the workability and drying properties, resulting in deterioration of the appearance and mechanical properties of the coating film.

Melamine resin

The melamine resin is a curing agent, which plays a role in curing the composition by cross-linking with each component of the clear coat composition and plays a role in improving the hardness of the coating film.

The melamine resin may be an alkylated melamine resin, and may be directly synthesized according to a known method, or may be a commercially available product. For example, the melamine resin may comprise at least one selected from the group consisting of methoxy methyl melamine, methyl melamine, butyl melamine, isobutoxy melamine, butoxy melamine, hexamethylol melamine, hexamethoxy methyl melamine, hexabutoxy methyl melamine, hexamethoxybutoxy methyl melamine, and iminomethoxy methyl melamine.

In addition, the melamine resin may comprise two types with different viscosity at 25 °C and weight-average molecular weight. That is, the clear coat composition may comprise a first melamine resin and a second melamine resin having different viscosity at 25 °C and weight-average molecular weight. As described above, if the clear coat composition of the present invention comprises two types of the melamine resin with different viscosity at 25 °C and weight-average molecular weight, it has the effect of improving the mechanical properties of the coating film by controlling the curing speed.

For example, the first melamine resin may have lower viscosity at 25 °C and lower weight-average molecular weight than those of the second melamine resin. Specifically, the first melamine resin may have a viscosity at 25 °C that is 3,000 to 5,000 cps lower than that of the second melamine resin. In addition, the first melamine resin may have a weight-average molecular weight that is 300 to 700 g/mol smaller than that of the second melamine resin.

The first melamine resin may have a weight-average molecular weight (Mw) of 500 to 800 g/mol, or 550 to 750 g/mol. If the weight-average molecular weight of the first melamine resin is within the above range, the crosslinking density is improved and thus it has the effect of improving the adhesiveness and hardness of the manufactured coating film. In addition, if the weight-average molecular weight of the first melamine resin is less than the above range, there is a problem that the weather resistance and scratch resistance of the coating film are reduced due to a decrease in crosslink density. If the weight-average molecular weight of the first melamine resin exceeds the above range, there may be a problem that the molecular weight is increased and thus the appearance characteristics of the coating film are deteriorated.

The first melamine resin may have a viscosity at 25 °C of 2,000 to 4,000 cps, or 2,400 to 3,800 cps. If the viscosity of the first melamine resin at 25 °C is within the above range, the appearance characteristics of the coating film are excellent. In addition, if the viscosity at 25 °C of the first melamine resin is less than the above range, there is a problem that the viscosity of the paint is too low and thus the coating film is not formed, thereby resulting in a decrease in the adhesiveness and scratch resistance of the coating film. If the viscosity at 25 °C of the first melamine resin exceeds the above range, there may be a problem that the appearance characteristics of the manufactured coating film may be deteriorated due to insufficient workability of the paint.

In addition, the first melamine resin may have an acid value (Av) of 1 mgKOH/g or less or 0.1 to 1 mgKOH/g. If the acid value of the first melamine resin exceeds the above range, there may be a problem that the reaction speed is increased and the adhesiveness and scratch resistance of the manufactured coating film are deteriorated.

The first melamine resin may have a solid content (NV) of 90 to 100 wt%, or 95 to 100 wt%, based on the total weight of the resin. If the solid content of the first melamine resin is within the above range, the storage stability of the resin and the storage stability of the coat composition may be improved and the workability may be excellent. In addition, if the solid content of the first melamine resin is less than the above range, there is a problem that the viscosity is too low and the workability of the coat composition containing it is insufficient. If the solid content of the first melamine resin exceeds the above range, the viscosity of the melamine resin is too high and thus the stability during the curing reaction is reduced, and the dispersion stability may be deteriorated, thereby causing agglomeration over time.

The second melamine resin may have a weight-average molecular weight (Mw) of 900 to 1,500 g/mol, or 1,000 to 1,300 g/mol. If the weight-average molecular weight of the second melamine resin is within the above range, it has the effect of improving the adhesiveness and hardness of the manufactured coating film by improving the crosslinking density. In addition, if the weight-average molecular weight of the second melamine resin is less than the above range, there is a problem that as the crosslinking density is decreased, the weather resistance and scratch resistance of the coating film are decreased. If the weight-average molecular weight of the second melamine resin exceeds the above range, there may be a problem that the molecular weight is increased and thus the appearance characteristics of the coating film are deteriorated.

In addition, the second melamine resin may have a viscosity at 25 °C of 5,000 to 9,000 cps, or 7,000 to 8,000 cps. If the viscosity of the second melamine resin at 25 °C is within the above range, the appearance characteristics of the coating film are excellent. If the viscosity of the second melamine resin at 25 °C is less than the above range, there may be a problem that the viscosity of the paint is too low and thus the coating film is not formed, thereby resulting in a decrease in the adhesiveness and scratch resistance of the coating film. If the viscosity at 25 °C of the second melamine resin exceeds the above range, there may be a problem that the appearance characteristics of the manufactured coating film deteriorate due to insufficient workability of the paint.

The second melamine resin may have an acid value (Av) of 1 mgKOH/g or less or 0.1 to 1 mgKOH/g. If the acid value of the second melamine resin exceeds the above range, there may be a problem that the reaction speed is increased, and the adhesiveness and scratch resistance of the manufactured coating film are decreased.

In addition, the second melamine resin may have a solid content (NV) of 75 to 95 wt%, or 80 to 90 wt% based on the total weight of the resin. If the solid content of the second melamine resin is within the above range, the storage stability of the second melamine resin and the storage stability of the coat composition may be improved and the workability may be excellent. In addition, if the solid content of the second melamine resin is less than the above range, there is a problem that the viscosity becomes too low and thus the workability of the coat composition containing it becomes insufficient. If the solid content of the second melamine resin exceeds the above range, the viscosity of the melamine resin is too high and thus the stability during the curing reaction is low, and the dispersion stability may be deteriorated, thereby causing agglomeration over time.

The melamine resin may be comprised in an amount of 10 to 25 wt%, or 12 to 23 wt% based on the total weight of the clear coat composition. If the content of the melamine resin is within the above range, it has the effect of improving the adhesion and hardness of the manufactured coating film by improving the crosslinking density. In addition, if the content of the melamine resin is less than the above range, there is a problem that the mechanical properties and chemical resistance of the coating film are deteriorated due to a decrease in curability. If the content of the melamine resin exceeds the above range, the coating film may become brittle due to excessive curability, and thus the adhesiveness and chipping resistance may be reduced.

Specifically, the melamine resin may include the first melamine resin and the second melamine resin at a weight ratio of 1:0.1 to 1.0, or 1:0.2 to 0.8. If the weight ratio of the first melamine resin and the second melamine resin is less than the above range, that is, if a small amount of the second melamine resin is included based on the weight of the first melamine resin, there is a problem that the curing speed is increased, thereby causing the coating film to become brittle and the appearance and scratch resistance to decrease. If the weight ratio of the first melamine resin and the second melamine resin exceeds the above range, that is, if an excessive amount of the second melamine resin is included based on the weight of the first melamine resin, there may be a problem that the crosslinking density of the coating film is decreased and the mechanical properties are deteriorated.

The clear coat composition may include a solvent.


Solvent

The solvent plays a role in controlling the viscosity of the composition, improving drying properties, and improving the appearance characteristics and spreadability of the manufactured coating film.

The solvent is not particularly limited as long as it is commonly used in clear coat composition, and for example, may be at least one selected from the group consisting of aromatic, acetate-based, alcohol-based, and propionate-based. Specifically, the solvent may include aromatic solvents such as toluene and xylene; acetate-based solvents such as 1-methoxy-2-propylacetate, methyl acetate, ethyl acetate, n-propyl acetate, n-butyl acetate, methyl glutarate, methyl succinate, methyl adipate, dimethyl glutarate, dimethyl succinate, dimethyl adipate, propylene glycol methyl ether acetate (PMA), butyl carbitol acetate, butyl cellosolve acetate, and trimethyl-o-acetate; alcohol-based solvents such as n-butanol, propanol, 1-methoxy-2-propanol, and 2-butoxyethanol; ketone-based solvents such as acetone, methyl ethyl ketone, methyl butyl ketone, and methyl isobutyl ketone; and a propionate-based solvent such as ethyl ethoxypropionate. In addition, the commercially available products of the aromatic solvent include Cocosol #100, Cocosol #150 and the like.

In addition, the solvent may be included in an amount of 5 to 40% by weight, or 10 to 35% by weight, based on the total weight of the clear coat composition. If the solvent is included within the above range, the viscosity of the paint is appropriately adjusted, thereby improving workability and drying properties. In addition, if the content of the solvent in the coat composition is less than the above range, there may be a problem that the workability of the composition is insufficient due to the high solid content in the composition. If the content of the solvent exceeds the above range, the solid content of the paint is low and thus the appearance and adhesiveness of the manufactured coating film are insufficient.

Additive

The clear coat composition according to the present invention may further include additives such as a curing catalyst, a light stabilizer, an ultraviolet absorber, a leveling agent, an anti-flow agent, and a surface conditioner. In this case, the additive is not particularly limited as long as it can be added to the clear coat composition.

For example, the surface conditioner may be a polysiloxane-based surface conditioner, and the polysiloxane-based surface conditioner plays a role of improving the appearance characteristics of the coating film, improving the leveling properties, improving the resistance to dirt during processing such as sanding powder, and reducing the surface tension to improve the resistance to external oils.

In addition, the content of the additive is not particularly limited as long as it is within the range that can normally be included in the clear coat composition. For example, the additive may be included in an amount of 5 to 45 wt%, or 10 to 40 wt%, based on the total weight of the clear coat composition.

The clear coat composition may be a 1-part type including a main part and a curing agent part.

In addition, the clear coat composition may have a solid content of 50 to 70 wt%, or 55 to 65 wt%. If the solid content of the clear coat composition is within the above range, there is an advantage that the painting workability of the composition becomes appropriate. In addition, if the solid content of the coat composition is less than the above range, there is a problem that the curing reactivity is decreased due to a decrease in the solid content of the composition. If the solid content of the coat composition exceeds the above range, there may be a problem that the workability of the manufactured paint is inferior and the appearance characteristics of the coating film are deteriorated.

The clear coat composition may have a viscosity of 20 to 50 seconds, or 25 to 45 seconds, based on Ford Cup No. 4 at 25 °C. If the viscosity of the clear coat composition at 25 °C is less than the above range, problems such as dripping from vertical surfaces may occur. If the viscosity of the clear coat composition at 25 °C exceeds the above range, due to the high viscosity of the composition, the appearance characteristic of the coating film manufactured from it may be reduced or the load on the sprayer may be placed, thereby causing a breakdown of the sprayer.

As described above, the clear coat composition according to the present invention comprises the silicone-modified polyester resin and two types of acrylic resin with different glass transition temperatures, and thus has the effect of improving the smoothness and scratch resistance of the thin film portion of the manufactured coating film. In addition, the coating film manufactured from the clear coat composition has low surface tension and thus is excellent in oil resistance to external contamination, and has excellent slip property, and thus is excellent in the resistance to contaminants that may occur during the process, such as sanding powder.

Hereinafter, the present invention will be described in more detail through examples. However, these examples are only intended to aid understanding of the present invention, and the scope of the present invention is not limited to these examples in any way.

**Examples 1 to 21 and Comparative Examples 1 to 8. Preparation of clear coat composition**

By mixing the ingredients in the same amounts as shown in Tables 1 to 3, clear coat compositions with a viscosity of 35 seconds at 25 °C based on Ford Cup No. 4 were prepared.

[Table 1]

| Component (wt%) | Example | | | | | | | | | | |
|---|---|---|---|---|---|---|---|---|---|---|---|
| | 1 | 2 | 3 | 4 | 5 | 6 | 7 | 8 | 9 | 10 | 11 |
| First acrylic resin-1 | 15 | 11 | 19 | 8 | 23 | 15 | 15 | 15 | 15 | | |
| First acrylic resin-2 | | | | | | | | | | 15 | |
| First acrylic resin-3 | | | | | | | | | | | 15 |

(continued)

| Component (wt%) | Example | | | | | | | | | | |
|---|---|---|---|---|---|---|---|---|---|---|---|
| | 1 | 2 | 3 | 4 | 5 | 6 | 7 | 8 | 9 | 10 | 11 |
| First acrylic resin-4 | | | | | | | | | | | |
| First acrylic resin-5 | | | | | | | | | | | |
| Second acrylic resin-1 | 15 | 20 | 20 | 20 | 20 | 11 | 19 | 8 | 23 | 15 | 15 |
| Second acrylic resin-2 | | | | | | | | | | | |
| Second acrylic resin-3 | | | | | | | | | | | |
| Second acrylic resin-4 | | | | | | | | | | | |
| Second acrylic resin-5 | | | | | | | | | | | |
| Polyester resin | 5 | 5 | 5 | 5 | 5 | 5 | 5 | 5 | 5 | 5 | 5 |
| Silicone-modified polyester resin | 5 | 5 | 5 | 5 | 5 | 5 | 5 | 5 | 5 | 5 | 5 |
| First melamine resin | 11 | 11 | 11 | 11 | 11 | 11 | 11 | 11 | 11 | 11 | 11 |
| Second melamine resin | 3 | 3 | 3 | 3 | 3 | 3 | 3 | 3 | 3 | 3 | 3 |
| Anti-flow agent | 28 | 28 | 28 | 28 | 21 | 28 | 28 | 28 | 25 | 28 | 28 |
| Ultraviolet absorber | 2 | 2 | 2 | 2 | 2 | 2 | 2 | 2 | 2 | 2 | 2 |
| Surface conditioner | 0.5 | 0.5 | 0.5 | 0.5 | 0.5 | 0.5 | 0.5 | 0.5 | 0.5 | 0.5 | 0.5 |
| Curing catalyst | 0.2 | 0.2 | 0.2 | 0.2 | 0.2 | 0.2 | 0.2 | 0.2 | 0.2 | 0.2 | 0.2 |
| Trimethyl-o-acetate | 5.5 | 5.5 | 2.5 | 5.5 | 3.5 | 7.5 | 3.5 | 7.5 | 3.5 | 5.5 | 5.5 |
| Cocosol #100 | 9.8 | 8.8 | 3.8 | 11.8 | 5.8 | 11.8 | 7.8 | 14.8 | 6.8 | 9.8 | 9.8 |
| Total | 100 | 100 | 100 | 100 | 100 | 100 | 100 | 100 | 100 | 100 | 100 |

[Table 2]

| Component (wt%) | Example | | | | | | | | | |
|---|---|---|---|---|---|---|---|---|---|---|
| | 12 | 13 | 14 | 15 | 16 | 17 | 18 | 19 | 20 | 21 |
| First acrylic resin-1 | 15 | 15 | 15 | 15 | 15 | 15 | 15 | 15 | 15 | 15 |
| First acrylic resin-2 | | | | | | | | | | |
| First acrylic resin-3 | | | | | | | | | | |
| First acrylic resin-4 | | | | | | | | | | |
| First acrylic resin-5 | | | | | | | | | | |
| Second acrylic resin-1 | | | 15 | 15 | 15 | 15 | 15 | 15 | 15 | 15 |
| Second acrylic resin-2 | 15 | | | | | | | | | |
| Second acrylic resin-3 | | 15 | | | | | | | | |
| Second acrylic resin-4 | | | | | | | | | | |
| Second acrylic resin-5 | | | | | | | | | | |
| Polyester resin | 5 | 5 | 2 | 9 | 0.5 | 12 | 5 | 5 | 5 | 5 |

(continued)

| Component (wt%) | Example | | | | | | | | | |
|---|---|---|---|---|---|---|---|---|---|---|
| | 12 | 13 | 14 | 15 | 16 | 17 | 18 | 19 | 20 | 21 |
| Silicone-modified polyester resin | 5 | 5 | 5 | 5 | 5 | 5 | 2 | 9 | 0.5 | 12 |
| First melamine resin | 11 | 11 | 11 | 11 | 11 | 11 | 11 | 11 | 11 | 11 |
| Second melamine resin | 3 | 3 | 3 | 3 | 3 | 3 | 3 | 3 | 3 | 3 |
| Anti-flow agent | 28 | 28 | 28 | 28 | 28 | 28 | 28 | 28 | 28 | 25 |
| Ultraviolet absorber | 2 | 2 | 2 | 2 | 2 | 2 | 2 | 2 | 2 | 2 |
| Surface conditioner | 0.5 | 0.5 | 0.5 | 0.5 | 0.5 | 0.5 | 0.5 | 0.5 | 0.5 | 0.5 |
| Curing catalyst | 0.2 | 0.2 | 0.2 | 0.2 | 0.2 | 0.2 | 0.2 | 0.2 | 0.2 | 0.2 |
| Trimethyl-o-acetate | 5.5 | 5.5 | 6.5 | 3.5 | 8.5 | 2.5 | 5.5 | 3.5 | 7.5 | 3.5 |
| Cocosol #100 | 9.8 | 9.8 | 11.8 | 7.8 | 11.3 | 5.8 | 12.8 | 7.8 | 12.3 | 7.8 |
| Total | 100 | 100 | 100 | 100 | 100 | 100 | 100 | 100 | 100 | 100 |

[Table 3]

| Component (wt%) | Comparative Example | | | | | | | |
|---|---|---|---|---|---|---|---|---|
| | 1 | 2 | 3 | 4 | 5 | 6 | 7 | 8 |
| First acrylic resin-1 | | 15 | 15 | 15 | | | 15 | 15 |
| First acrylic resin-2 | | | | | | | | |
| First acrylic resin-3 | | | | | | | | |
| First acrylic resin-4 | | | | | 15 | | | |
| First acrylic resin-5 | | | | | | 15 | | |
| Second acrylic resin-1 | 15 | | 15 | 15 | 15 | 15 | | |
| Second acrylic resin-2 | | | | | | | | |
| Second acrylic resin-3 | | | | | | | | |
| Second acrylic resin-4 | | | | | | | 15 | |
| Second acrylic resin-5 | | | | | | | | 15 |
| Polyester resin | 5 | 5 | | 5 | 5 | 5 | 5 | 5 |
| Silicone-modified polyester resin | 5 | 5 | 5 | | 5 | 5 | 5 | 5 |
| First melamine resin | 11 | 11 | 11 | 11 | 11 | 11 | 11 | 11 |
| Second melamine resin | 3 | 3 | 3 | 3 | 3 | 3 | 3 | 3 |
| Anti-flow agent | 28 | 28 | 28 | 28 | 28 | 28 | 28 | 28 |
| Ultraviolet absorber | 2 | 2 | 2 | 2 | 2 | 2 | 2 | 2 |
| Surface conditioner | 0.5 | 0.5 | 0.5 | 0.5 | 0.5 | 0.5 | 0.5 | 0.5 |
| Curing catalyst | 0.2 | 0.2 | 0.2 | 0.2 | 0.2 | 0.2 | 0.2 | 0.2 |
| Trimethyl-o-acetate | 10.5 | 10.5 | 7.5 | 7.5 | 5.5 | 5.5 | 5.5 | 5.5 |
| Cocosol #100 | 19.8 | 19.8 | 12.8 | 12.8 | 9.8 | 9.8 | 9.8 | 9.8 |
| Total | 100 | 100 | 100 | 100 | 100 | 100 | 100 | 100 |

Hereinafter, the manufacturer, product name, or ingredient name of each ingredient used in Comparative Examples and Examples is shown in Table 4:

[Table 4]

| | Physical properties, or manufacturer and product name |
|---|---|
| First acrylic resin-1 | Tg 38.4°C, Mw 8,200g/mol, OHv 89mgKOH/g, Av 0.1mgKOH/g, NV 70 wt% |
| First acrylic resin-2 | Tg 29.6°C, Mw 8,200g/mol, OHv 89mgKOH/g, Av 0.2mgKOH/g, NV 70 wt% |
| First acrylic resin-3 | Tg 47.2°C, Mw 8,200g/mol, OHv 89mgKOH/g, Av 0.2mgKOH/g, NV 70 wt% |
| First acrylic resin-4 | Tg 22.7°C, Mw 8,200g/mol, OHv 89mgKOH/g, Av 0.2mgKOH/g, NV 70 wt% |
| First acrylic resin-5 | Tg 58.2°C, Mw 8,200g/mol, OHv 89mgKOH/g, Av 0.2mgKOH/g, NV 70 wt% |
| Second acrylic resin-1 | Tg 10°C, Mw 2,600g/mol, OHv 155mgKOH/g, Av 6.8mgKOH/g, NV 65 wt% |
| Second acrylic resin-2 | Tg 3°C, Mw 2,600g/mol, OHv 155mgKOH/g, Av 6.8mgKOH/g, NV 65 wt% |
| Second acrylic resin-3 | Tg 16.9°C, Mw 2,600g/mol, OHv 155mgKOH/g, Av 6.8mgKOH/g, NV 65 wt% |
| Second acrylic resin-4 | Tg 0°C, Mw 2,600g/mol, OHv 155mgKOH/g, Av 6.8mgKOH/g, NV 65 wt% |
| Second acrylic resin-5 | Tg 22.8°C, Mw 2,600g/mol, OHv 155mgKOH/g, Av 6.8mgKOH/g, NV 65 wt% |
| Polyester resin | Tg 21°C, Mw 1,210g/mol, Av 20mgKOH/g, OHv 250mgKOH/g, NV 75 wt%, Viscosity at 25 °C: 1,120cps |
| Silicone-modified polyester resin | Tg -12°C, Mw 1,850 g/mol, Av: 7mgKOH/g, OHv 205mgKOH/g, NV 90 wt%, Viscosity at 25 °C: 6,850cps |
| First melamine resin | Mw: 680g/mol, Av: 1mgKOH/g, NV: 97 wt%, Viscosity at 25 °C: 3,200cps |
| Second melamine resin | Mw: 1,245g/mol, Av: 0.5mgKOH/g, NV: 85 wt%, Viscosity at 25 °C: 7, 250cps |
| Anti-flow agent | Manufacturer: ALLEX, Product name: C-91756 |
| Ultraviolet absorber | Manufacturer: BASF, Product name: TINUVIN 1130 |
| Surface conditioner | Manufacturer: BYK, Product name: BYK-3550 |
| Curing catalyst | Manufacturer: KING, Product name: NACURE-5543 |

## Experiment Example. Evaluation of coat characteristics

A base paint (Manufacturer: KCC, Product name: WT3062) was bell-coated on the specimen and hot air was blown at 80°C for 3 minutes to evaporate the water remaining in the paint and thus to form a base coat with a thickness of 15$\mu$m. Afterwards, the clear coat compositions prepared in Examples and Comparative Examples were painted on the base coat and cured at 140 °C for 20 minutes to form a clear coating film with a thickness of 40gm and thus to prepare a final coating film. The physical properties were measured for the above specimen in the following manner, and the results are shown in Table 5.

Specifically, the clear coating film was applied by using a handgun spray (Nozzle diameter: 1.5mm, Air pressure: kept constant around 4.5kgf/cm$^2$) and moving horizontally at a speed of 40 to 50 cm/sec while maintaining a constant distance of 30 cm between the nozzle inlet and the specimen.

(1) Appearance

The gloss (LU), sharpness (SH), and orange peel (OP) of the manufactured final coating film were measured using Wave Scan DOI (BYK Gardner), an automobile exterior measuring instrument, and using the measured physical properties, the comprehensive appearance evaluation value (CF) was calculated using Equation 1 below.

[Equation 1]

$$CF = LU \times 0.15 + SH \times 0.35 + OP \times 0.5$$

In this case, CF was measured and calculated horizontally and vertically.

If the calculated CF was 65 or more, it was evaluated as excellent (◎) , if the calculated CF was 60 or more but less than 65, it was evaluated as good (O), if the calculated CF was 55 or more but less than 60, it was evaluated as normal (△), and if the calculated CF was less than 55, it was evaluated as defective (X).

(2) Oil resistance

The base paint was applied to a painting specimen of size 300mm×300mm, and then 5ml of fragrance material (polyoxyethylene) with oil particles was sprayed, and the clear paint was applied, and then the number of crater shapes on the surface of the coating film was measured.

Specifically, if the number of crater shapes relative to the total surface area of the specimen was 3 or less, it was evaluated as excellent (◎), if the number was 4 or more but less than 6, it was evaluated as good (o), if the number was 7 or more but less than 9, it was evaluated as normal (△), and if the number was 10 or more, it was evaluated as defective (×).

(3) Adhesiveness characteristics during re-painting

The base coat and clear coat were peeled off and the base paint and clear paint were applied in the same manner as described above, and then the adhesiveness characteristics during re-painting were evaluated using the checkerboard method.

Specifically, in the checkerboard method, 100 squares of 2 mm in width and 2 mm in height were made on the surface of the final coating film with a knife, and then the squares were removed using tape to measure adhesiveness. In this case, if 100 squares were 100% completely attached, the measured adhesiveness was evaluated as excellent (◎), if the remaining squares were more than 70% but less than 100%, the measured adhesiveness was evaluated as good (o), if the remaining squares were 50% or more but less than 70%, the measured adhesiveness was evaluated as normal (△), and if the remaining squares were less than 50%, the measured adhesiveness was evaluated as defective (X).

(4) Solvent resistance

A cotton cloth sufficiently soaked in xylene solvent was placed on the surface of the final coating film, and then the surface was scratched with a fingernail 4 times per minute with a force of 2 kgf, and the time at which the base coat appeared was measured.

As a result of the measurement, if it was 15 minutes or more, it was evaluated as excellent (◎), if it was 7 minutes or more but less than 15 minutes, it was evaluated as good (o), if it was 5 minutes or more but less than 7 minutes, it was evaluated as normal (△), and if it was less than 5 minutes, it was evaluated as defective (×).

(5) Scratch resistance

The initial 20° gloss of the final coating film was measured using a polisher, and the 20° gloss was measured after 10 reciprocating surface treatments while spraying quartz powder and water using an Amtec Kistler which is a car wash machine. The gloss retention rate of the gloss after surface treatment was calculated based on the gloss before surface treatment.

In this case, if the gloss retention rate was 70% or more, it was evaluated as excellent (◎), if the gloss retention rate was 60% or more but less than 70%, it was evaluated as good(O), if the gloss retention rate was 550 or more and less than 60%, it was evaluated as normal (△), and if the gloss retention rate was less than 55%, it was evaluated as defective (X).

(6) Impact resistance

The impact resistance of the final coating film was evaluated according to ASTM D2794. In this case, a Dupont type impact tester was used, and the appearance of the coating film was observed when a 500 g weight was dropped on the specimen while varying the drop height of the weight from 30 cm to 50 cm.

As a result of observation, if no cracks and peeling phenomenon are occurred in the coat by the weight falling from a height of 50cm, it was evaluated as excellent (◎), if cracks are occurred in the coat by the weight falling from a height of 30cm or more but less than 50cm, it was evaluated as good (o), if cracks are occurred in the coat by the weight falling from a height of 20cm or more but less than 30cm, it was evaluated as normal (△), and if cracks are occurred in the coat by the weight falling from a height of less than 20cm, it was evaluated as defective (×).

Table 5:

| | | Appearance | oil resistance | Adhesiveness characteristic during re-painting | Solvent resistance | Scratch resistance | Impact resistance |
|---|---|---|---|---|---|---|---|
| Example | 1 | ◎ | ◎ | ◎ | ◎ | ◎ | ◎ |
| | 2 | ○ | ◎ | ◎ | ○ | ◎ | ○ |
| | 3 | ○ | ◎ | ○ | ◎ | ○ | ◎ |
| | 4 | Δ | ◎ | ○ | Δ | ◎ | Δ |
| | 5 | Δ | ◎ | Δ | ○ | Δ | ◎ |
| | 6 | ○ | ○ | ◎ | ○ | ◎ | ○ |
| | 7 | ○ | ◎ | ○ | ◎ | ○ | ◎ |
| | 8 | Δ | Δ | ○ | Δ | ◎ | Δ |
| | 9 | Δ | ○ | Δ | ○ | Δ | ◎ |
| | 10 | ◎ | ◎ | ○ | ○ | ○ | ○ |
| | 11 | ○ | ◎ | ○ | ◎ | ○ | ○ |
| | 12 | ◎ | ○ | ○ | ○ | ○ | ○ |
| | 13 | ○ | ◎ | ○ | ◎ | ○ | ○ |
| | 14 | ○ | ◎ | ◎ | ○ | ○ | ○ |
| | 15 | ○ | ◎ | ◎ | ◎ | ○ | ○ |
| | 16 | Δ | ◎ | ○ | Δ | Δ | Δ |
| | 17 | Δ | ◎ | ◎ | ○ | Δ | Δ |
| | 18 | ○ | ○ | ◎ | ○ | ○ | ○ |
| | 19 | ○ | ◎ | ◎ | ◎ | ○ | ○ |
| | 20 | Δ | Δ | ○ | Δ | Δ | Δ |
| | 21 | Δ | ◎ | ◎ | ○ | Δ | Δ |
| Comparative Example | 1 | X | ○ | Δ | X | ○ | X |
| | 2 | X | X | Δ | X | ○ | X |
| | 3 | X | ○ | Δ | X | X | X |
| | 4 | X | X | Δ | ○ | X | X |
| | 5 | Δ | ○ | X | X | X | X |
| | 6 | X | ○ | X | Δ | X | X |
| | 7 | Δ | Δ | X | Δ | X | X |
| | 8 | X | ○ | X | Δ | X | X |

As shown in Table 5, it was found that the coating films prepared from the compositions of Examples 1 to 21 were superior to the coats prepared from the compositions of Comparative Examples in appearance characteristics, oil resistance, adhesiveness characteristics during re-painting, solvent resistance, scratch resistance, and impact resistance.

Meanwhile, Comparative Example 1, which did not comprise the first acrylic resin, and Comparative Example 3, which did not comprise the polyester resin, had insufficient appearance characteristics, solvent resistance, and impact resistance. In particular, Comparative Example 3 also had insufficient scratch resistance.

In addition, Comparative Example 2, which did not comprise the second acrylic resin, and Comparative Example 4, which did not comprise the silicone-modified polyester resin, had insufficient appearance characteristics, oil resistance, and impact resistance. In particular, Comparative Example 2 had insufficient solvent resistance, and Comparative Example 4 had insufficient scratch resistance.

Comparative Example 5 comprising the first acrylic resin-4 with a low glass transition temperature, Comparative Example 6 comprising the first acrylic resin-5 with a high glass transition temperature, Comparative Example 7 comprising the second acrylic resin-4 with a low glass transition temperature, and Comparative Example 8 comprising the second acrylic resin-5 with a high glass transition temperature, had insufficient adhesiveness characteristics during re-painting, scratch resistance and impact resistance. In addition, Comparative Example 5 had insufficient solvent resistance, and Comparative Examples 6 and 8 had insufficient appearance characteristics.

## Claims

1. A clear coat composition, comprising:

   a first acrylic resin, a second acrylic resin, a polyester resin, a silicone-modified polyester resin, and a melamine resin,
   wherein the first acrylic resin has a glass transition temperature of 25 to 55 °C, and
   the second acrylic resin has a glass transition temperature of 1 to 20 °C.

2. The clear coat composition according to claim 1, wherein the first acrylic resin has a hydroxyl value of 50 to 100 mgKOH/g and a weight-average molecular weight of 6,000 to 10,000 g/mol.

3. The clear coat composition according to claim 1, wherein the second acrylic resin has an acid value of 3 to 10 mgKOH/g, a hydroxyl value of 110 to 200 mgKOH/g, and a weight-average molecular weight of 1,000 to 4,000 g/mol.

4. The clear coat composition according to claim 1, wherein the polyester resin has an acid value of 15 to 25 mgKOH/g, a hydroxyl value of 200 to 300 mgKOH/g, a glass transition temperature of 15 to 30 °C, and a weight-average molecular weight of 800 to 1,500 g/mol.

5. The clear coat composition according to claim 1, wherein the silicone-modified polyester resin has an acid value of 10 mgKOH/g or less, a hydroxyl value of 150 to 250 mgKOH/g, a glass transition temperature of -20 to 0 °C, and a weight-average molecular weight of 1,300 to 2,500 g/mol.

6. The clear coat composition according to claim 1, wherein it comprises 10 to 20 wt% of the first acrylic resin, 10 to 20 wt% of the second acrylic resin, 1 to 10 wt% of the polyester resin, 1 to 10 wt% of the silicone-modified polyester resin, and 10 to 25 wt% of the melamine resin, based on the total weight of the composition.

## INTERNATIONAL SEARCH REPORT

| International application No. |
| --- |
| **PCT/KR2022/006675** |

**A. CLASSIFICATION OF SUBJECT MATTER**

**C09D 133/04**(2006.01)i; **C09D 167/00**(2006.01)i; **C09D 179/04**(2006.01)i; **C09D 5/00**(2006.01)i

According to International Patent Classification (IPC) or to both national classification and IPC

**B. FIELDS SEARCHED**

Minimum documentation searched (classification system followed by classification symbols)

C09D 133/04(2006.01); C09D 133/14(2006.01); C09D 167/00(2006.01); C09D 175/04(2006.01); C09D 5/02(2006.01); C09D 5/08(2006.01); C09D 7/63(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 클리어 코트 조성물(clear coat composition), 폴리에스터 수지(polyester resin), 멜라민 수지(melamine resin), 실리콘 변성 폴리에스터 수지(silicone-modified polyester resin), 아크릴 수지(acrylic resin)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2021-0000138 A (KCC CORPORATION) 04 January 2021 (2021-01-04)<br>See claims 1, 2, 4 and 6; and paragraph [0019]. | 1-6 |
| Y | KR 10-2020-0082837 A (KCC CORPORATION) 08 July 2020 (2020-07-08)<br>See claims 1 and 5; and paragraphs [0014]-[0017], [0024], [0039], [0040] and [0049]. | 1-6 |
| A | KR 10-2021-0039207 A (KCC CORPORATION) 09 April 2021 (2021-04-09)<br>See entire document. | 1-6 |
| A | JP 2009-227747 A (KANSAI PAINT CO., LTD.) 08 October 2009 (2009-10-08)<br>See entire document. | 1-6 |
| A | JP 2017-137388 A (KANSAI PAINT CO., LTD.) 10 August 2017 (2017-08-10)<br>See entire document. | 1-6 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 August 2022** | **17 August 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<table>
<tr><td colspan="2" align="center"><b>INTERNATIONAL SEARCH REPORT</b><br>Information on patent family members</td><td colspan="2">International application No.<br><br><b>PCT/KR2022/006675</b></td></tr>
</table>

| Patent document cited in search report | | | Publication date (day/month/year) | Patent family member(s) | | | Publication date (day/month/year) |
|---|---|---|---|---|---|---|---|
| KR | 10-2021-0000138 | A | 04 January 2021 | KR | 10-2304417 | B1 | 24 September 2021 |
| | | | | WO | 2020-262869 | A2 | 30 December 2020 |
| | | | | WO | 2020-262869 | A3 | 18 February 2021 |
| KR | 10-2020-0082837 | A | 08 July 2020 | CN | 113227280 | A | 06 August 2021 |
| | | | | KR | 10-2242958 | B1 | 21 April 2021 |
| | | | | SG | 11202106801 | A | 29 July 2021 |
| | | | | WO | 2020-141733 | A1 | 09 July 2020 |
| KR | 10-2021-0039207 | A | 09 April 2021 | CN | 112592628 | A | 02 April 2021 |
| | | | | KR | 10-2419825 | B1 | 12 July 2022 |
| JP | 2009-227747 | A | 08 October 2009 | JP | 5547375 | B2 | 09 July 2014 |
| JP | 2017-137388 | A | 10 August 2017 | JP | 6696714 | B2 | 20 May 2020 |

Form PCT/ISA/210 (patent family annex) (July 2019)

**EP 4 339 250 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1655621